(19) Europäisches Patentamt
European Patent Office
Office européen des brevets

(11) Veröffentlichungsnummer: **0 199 950**
**A1**

(12) **EUROPÄISCHE PATENTANMELDUNG**

(21) Anmeldenummer: **86103511.1**

(22) Anmeldetag: **15.03.86**

(51) Int. Cl.⁴: **C09B 62/04**, C09B 62/503, D06P 1/38

(30) Priorität: **25.04.85 DE 3514969**

(43) Veröffentlichungstag der Anmeldung: **10.12.86 Patentblatt 86/45**

(84) Benannte Vertragsstaaten: **CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Meininger, Fritz, Dr.**
**Loreleistrasse 7**
**D-6230 Frankfurt am Main 80(DE)**
Erfinder: **Springer, Hartmut, Dr.**
**Am Erdbeerstein 27**
**D-6240 Königstein/Taunus(DE)**
Erfinder: **König, Gerd, Dr.**
**Breckenheimer Strasse 32**
**D-6238 Hofheim am Taunus(DE)**

(54) **Verfahren zum Färben oder Bedrucken von Hydroxygruppen enthaltenden Fasermaterialien mit neuen faserreaktiven Farbstoffen.**

(57) Ein Verfahren zum Färben oder Bedrucken von Hydroxygruppen enthaltenden Fasermaterialien, bei welchem man einen wasserlöslichen Farbstoff auf dem zu färbenden Material im sauren, neutralen oder alkalischen pH-Bereich fixiert, wobei der verwendete Farbstoff ein neuer, wasserlöslicher organischer Farbstoff ist, der mindestens einmal die faserreaktive Gruppe der allgemeinen Formel (1)

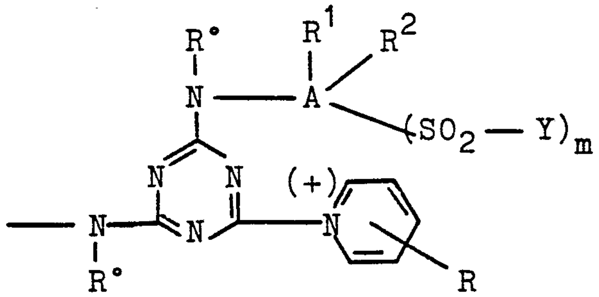

$[An]^{(-)}$

(1)

enthält, in welcher R° ein Wasserstoffatom oder eine gegebenenfalls substituierte Alkylgruppen, A ein Benzol-oder Naphthalinring, $R^1$ Wasserstoff, Halogen, Alkyl, Alkoxy, Hydroxy, Carboxy oder Sulfo und $R^2$ Wasserstoff, Halogen, Alkyl, Alkoxy, Hydroxy, Carboxy oder Sulfo ist, Y eine Vinylsulfonylgruppe bedeutet oder eine Ethylsulfonylgruppe ist, die in β-Stellung einen alkalisch eliminierbaren Substituenten gebunden enthält, m für die Zahl 1 oder 2 steht, R Wasserstoff, Halogen, Alkyl, Alkoxy, Carboxy, Carbamoyl, Carbalkoxy von 2 bis 5 C-Atomen, Carbophenoxy, Cyano oder Sulfo ist und $-[An]^{(-)}$ ein farbloses anorganisches oder organisches Anion bedeutet.

Wegen ihrer Fähigkeit, auf Cellulosefaser auch im

EP 0 199 950 A1

sauren und im neutralen pH-Bereich zu fixieren, können die neuen Farbstoffe mit der faserreaktiven Gruppe (1) zusammen mit Dispersionsfarbstoffen zum gleichzeitigen Färben von Cellulosefaser/Polyesterfaser-Gemischen eingesetzt werden, ohne daß eine Schädigung des Dispersionsfarbstoffes zu befürchten ist.

Die neuen Farbstoffe eignen sich ebenfalls zum Färben von carbonamidgruppenhaltigen Fasermaterialien, wie Wolle, Seide und synthetischen Polyamiden.

# Verfahren zum Färben oder Bedrucken von Hydroxygruppen enthaltenden Fasermaterialien mit neuen faserreaktiven Farbstoffen

Die Erfindung liegt auf dem technischen Gebiet der faserreaktiven Farbstoffe.

Reaktivfarbstoffe müssen eine funktionelle Gruppe aufweisen, die eine kovalente Bindung mit der Faser bilden kann. Aus der Vielfalt bekannter faserreaktiver Gruppen haben jedoch nur wenige eine hervorragende technische Bedeutung erlangt, wie beispielsweise die Vinylsulfon-oder die $\beta$-Sulfoäthylsulfon-Gruppe. Diese von der Textilindustrie zum reaktiven Färben und Bedrucken von Cellulosefasern verwendeten Farbstoffe müssen unter Zusatz von säurebindenden Mitteln, d.h. im alkalischen Bereich, auf dem zu färbenden Material fixiert werden, um eine möglichst optimale Fixierquote des Farbstoffes zu erzielen. Der Einsatz solcher Farbstoffe erleidet jedoch wegen der durch den Chemismus bedingten Festlegung auf den alkalischen Fixierbereich dann eine gravierende Beschränkung, wenn er mit den ebenso für die Textilindustrie wichtigen Dispersionsfarbstoffen zum Färben von Polyesterfasern kombiniert werden soll: So ist beispielsweise das einstufig-einbadige Färben eines Baumwoll-Polyester-Mischgewebes mit Reaktiv-und Dispersionsfarbstoffen aus einem alkalischen Färbebad außerordentlich problematisch oder sogar unmöglich.

Es stellte sich somit die Aufgabe, ein Verfahren zum reaktiven Färben von Hydroxygruppen enthaltenden Fasermaterialien aufzufinden, welches sich in einem erweiterten pH-Gebiet, d.h. im alkalischen, neutralen und sauren Bereich, gleichermaßen gut anwenden läßt. Seitens der Farbstoffhersteller hat es nicht an Versuchen gemangelt, diese Problematik durch geeignet erscheinende Maßnahmen zu lösen; es ist deshalb erstaunlich, daß diese Bemühungen bisher mehr oder weniger fehlgeschlagen sind. So konnte sich beispielsweise das in der deutschen Patentschrift 2 451 005 vorgeschlagene und an sich geeignete Verfahren zum alkalischen und sauren reaktiven Färben und Bedrucken von Hydroxygruppen enthaltenden Fasermaterialien technisch nicht durchsetzen, weil die zur Farbstoffherstellung erforderlichen Zwischenprodukte nur auf umständliche Weise zugänglich und außerdem toxikologisch nicht unbedenklich sind. Auch die in der deutschen Auslegeschrift 2 835 035 offenbarte Lehre blieb bisher ohne nennenswerten Einfluß auf die Färbereitechnologie, weil mit diesem Verfahren zum Färben von Cellulosefasern mit Reaktivfarbstoffen nur ungenügende Fixierquoten erzielbar sind. Eine technisch erfolgreiche Lösung dieses Problems, die insbesondere den Einsatz solcher Reaktivfarbstoffe berücksichtigt, die Vinylsulfon- oder $\beta$-Sulfatoäthylsulfon-Gruppen enthalten, ist bisher nicht bekannt geworden; hierzu konnte auch das in der deutschen Offenlegungsschrift 33 14 663 beschriebene Verfahren nichts beitragen.

Mit der vorliegenden Erfindung wurde nun ein Verfahren zum Färben und Bedrucken von Hydroxygruppen enthaltenden Fasermaterialien gefunden, das die Anwendung neuer, nachfolgend beschriebener erfindungsgemäßer Reaktivfarbstoffe im alkalischen bis neutralen pH-Bereich und wahlweise auch im sauren pH-Bereich, somit auch vorteilhaft in Kombination mit Dispersionsfarbstoffen, gestattet.

Die Erfindung basiert auf neuen, wasserlöslichen organischen Farbstoffen, die auf den zu färbenden hydroxygruppenhaltigen Fasermaterialien im sowohl alkalischen und neutralen als auch sauren pH-Bereich fixieren und die mindestens einmal, vorzugsweise ein-oder zweimal, die faserreaktive Gruppe der nachstehend angegebenen und definierten allgemeinen Formel (1) und gegebenenfalls eine anionische wasserlöslich-machende Gruppe, vorzugsweise jedoch mindestens eine solche anionische Gruppe, enthalten.

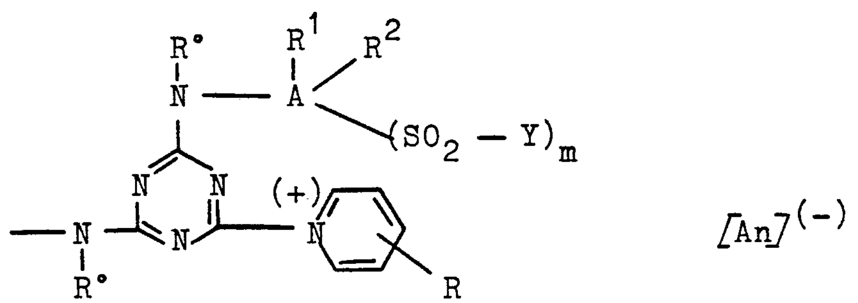

(1)

In dieser Formel bedeuten:

$R^o$ ist ein Wasserstoffatom oder eine Alkylgruppe, vorzugsweise eine Alkylgruppe von 1 bis 4 C-Atomen, oder eine substituierte Alkylgruppe, bevorzugt jedoch ein Wasserstoffatom, wobei die beiden $R^o$ zueinander gleiche oder voneinander verschiedene Bedeutungen besitzen können; A ist ein Benzol-oder Naphthalinring;

$R^1$ ist ein Wasserstoffatom, ein Halogenatom, wie insbesondere ein Chloratom, eine Alkylgruppe, insbesondere eine von 1 bis 4 C-Atomen, eine Alkoxygruppe, insbesondere eine von 1 bis 4 C-Atomen, eine Hydroxygruppe, eine Carboxygruppe oder Sulfogruppe;

$R^2$ ist ein Wasserstoffatom, ein Halogenatom, wie insbesondere ein Chloratom, eine Alkylgruppe, insbesondere eine von 1 bis 4 C-Atomen, eine Alkoxygruppe, insbesondere eine von 1 bis 4 C-Atomen, eine Hydroxygruppe, eine Carboxygruppe oder Sulfogruppe;

die beiden Reste $R^1$ und $R^2$ können zueinander gleiche oder voneinander verschiedene Bedeutungen besitzen;

Y ist eine Gruppe der allgemeinen Formel (2a) oder (2b)

$$—SO_2\text{-}CH=CH_2 \quad (2a)$$

$$—SO_2\text{-}CH_2\text{-}CH_2\text{-}X \quad (2b)$$

in welcher

X einen alkalisch eliminierbaren Substituenten bedeutet;

m ist die Zahl 1 oder 2;

R ist ein Wasserstoffatom, ein Halogenatom, wie insbesondere ein Chloratom, eine Alkylgruppe, insbesondere eine von 1 bis 4 C-Atomen, eine Alkoxygruppe, insbesondere eine von 1 bis 4 C-Atomen, eine Carboxygruppe, eine Carbonamidgruppe, eine Carbalkoxygruppe von 2 bis 5 C-Atomen, eine Carbophenoxygruppe, eine Cyanogruppe oder eine Sulfogruppe;

$[An]^{(-)}$ ist ein farbloses anorganisches oder organisches monovalentes Anion, wie ein Chlorid-, Hydrogensulfat-, Nitrat-, Acetat-oder Chloracetat-Anion, oder das Äquivalent eines farblosen anorganischen oder organischen bi-oder trivalenten Anions, wie des Sulfat-, Phosphat-, Oxalat-Anions.

Die vorliegende Erfindung betrifft somit nicht nur die Auffindung neuer vorteilhafter Farbstoffe mit einer Gruppe der allgemeinen Formel (1), sondern insbesondere ein Verfahren zum Färben oder Bedrucken von Hydroxygruppen enthaltenden Fasermaterialien, wie insbesondere Cellulosefasermaterialien, das dadurch gekennzeichnet ist, daß man einen wasserlöslichen organischen Farbstoff, der mindestens einmal die oben angegebene und definierte faserreaktive Gruppe der allgemeinen Formel (1) und gegebenenfalls eine anionische wasserlöslich-machende Gruppe, bevorzugt jedoch mindestens eine solche wasserlöslich-machende Gruppe, gebunden enthält, oder mehrere solcher erfindungsgemäßen Farbstoffe auf dem zu färbenden Material im sauren, neutralen oder alkalischen pH-Bereich fixiert.

Bevorzugt ist das erfindungsgemäße Verfahren dadurch gekennzeichnet, daß man einen oder mehrere solcher Farbstoffe in Form einer Farbstofflösung oder Druckpaste, bevorzugt in wäßriger Farbstofflösung oder Druckpaste, die gegebenenfalls übliche Hilfsmittel enthalten, auf das Fasermaterial aufbringt und den bzw. die Farbstoffe bei einer Temperatur zwischen 10 und 230°C, vorzugsweise zwischen 20 und 210°C, insbesondere zwischen 40 und 150°C, bei einem pH-Wert zwischen 5 und 12, so bspw. mittels einem säurebindenden Mittel bei einem pH-Wert zwischen 7 und 12, vorzugsweise zwischen 7,5 und 10, oder, vorzugsweise in Anwesenheit von Puffersubstanzen, bei einem pH-Wert zwischen 5 und 7, fixiert. Bevorzugt erfolgt die erfindungsgemäße Verfahrensweise nach der Ausziehmethode, indem man das Fasermaterial in einem Färbebad, vorzugsweise rein-wäßrigem Färbebad, das einen oder mehrere der erfindungsgemäßen Farbstoffe mit der faserreaktiven Gruppe (1) und gegebenenfalls übliche Färbehilfsmittel und entweder ein oder mehrere säurebindende Mittel gelöst enthält, bei einem pH-Wert zwischen 7 und 12, vorzugsweise zwischen 7,5 und 10, oder in Abwesenheit von säurebindenden Mitteln bei einem pH-Wert zwischen 5 und 7, vorzugsweise in Anwesenheit von Puffersubstanzen, bei einer Temperatur zwischen 40 und 150°C, vorzugsweise zwischen 60 und 100°C, behandelt.

Die erfindungsgemäßen Farbstoffe, die für das erfindungsgemäße Verfahren geeignet sind, entstammen den verschiedenen Farbstoffklassen. Beispielsweise kann man Triarylmethan-,

Naphthochinon-, Benzanthron-, Azin-, Dioxazin-, Phenazin-, Phenoxazin-, Azomethin-, Xanthen-, Nitro-, Stilben-oder Formazanfarbstoffe, insbesondere aber Phthalocyaninfarbstoffe, Anthrachinonfarbstoffe und metallfreie oder metallhaltige Monoazo-oder Polyazofarbstoffe, wie Dis-und Trisazofarbstoffe, verwenden , die mindestens einmal die faserraktive Gruppe (1) und vorzugsweise eine oder mehrere anionische wasserlöslich-machende Gruppen enthalten. Wasserlöslich-machende Gruppen sind beispielsweise Carboxygruppen, Sulfatogruppen und Phosphatogruppen, insbesondere jedoch Sulfogruppen.

Substituierte Alkylgruppen sind vorzugsweise Alkylgruppen von 1 bis 4 C-Atomen, die durch einen oder zwei, vorzugs weise einen, Substituenten substituiert sind, die der Gruppe der Substituenten Hydroxy, Sulfo, Sulfato und Cyano angehören.

Eine Sulfogruppe ist eine Gruppe entsprechend der allgemeinen Formel $-SO_3M$ , eine Carboxygruppe eine Gruppe entsprechend der allgemeinen Formel -COOM , eine Sulfatogruppe eine Gruppe entsprechend der allgemeinen Formel $-OSO_3M$ und eine Phosphatogruppe eine Gruppe entsprechend der allgemeinen Formel $-OPO_3M_2$ , in welchen M die später angegebene Bedeutung besitzt.

Die neuen, erfindungsgemäßen faserreaktiven Farbstoffe, die in das erfindungsgemäße Verfahren eingesetzt werden, sind insbesondere organische Farbstoffe, die einer der oben genannten Farbstoffklassen angehören und eine oder zwei faserreaktive Gruppen der allgemeinen Formel (1) gebunden enthalten und deren Farbstoffrest eine oder mehrere Sulfogruppen, wie beispielsweise 1 bis 8 Sulfogruppen, besitzt. Diese Farbstoffe können durch die nachstehend angegebenen allgemeinen Formeln (3a) und (3b)

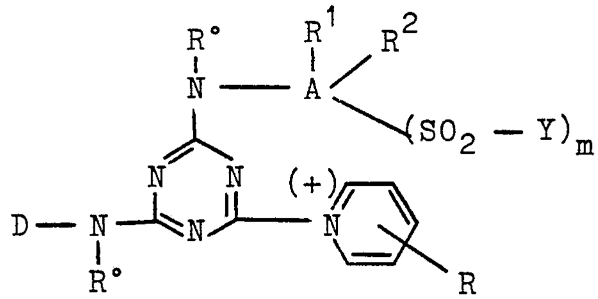

(3a)

$[An]^{(-)}$

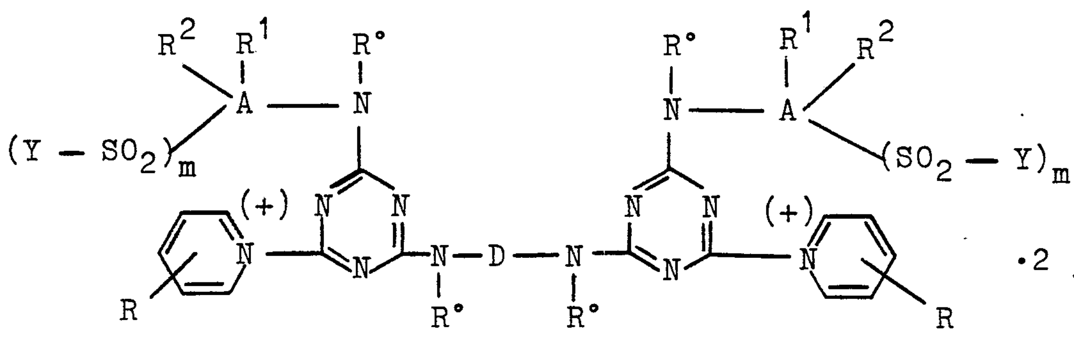

(3b)

$\cdot 2\ [An]^{(-)}$

wiedergegeben werden, in welchen R, R°, $R^1$, $R^2$, A, Y, m und $[An]^{(-)}$ die oben genannten Bedeutungen haben und D den Rest eines Farbstoffchromophors eines Triarylmethan-, Naphthochinon-, Benzanthron-, Azin-, Dioxazin-, Nitro-, Stilben-oder Formazanfarbstoffes, insbesondere aber eines Phthalocyaninfarbstoffes, Anthrachinonfarbstoffes oder metallfreien oder metallhaltigen Monoazo-oder Polyazofarbstoffes, der mindestens eine Sulfogruppe gebunden enthält, bedeutet. Der Formelrest D besitzt die in diesen Farbstoffen üblichen Substituenten, so beispielsweise neben mindestens einer Sulfogruppe ein oder mehrere Substituenten, die beispielsweise der Gruppe der Substituenten Alkyl von 1 bis 4 C-Atomen, wie Methyl, Äthyl, n-Propyl und i-Propyl, Alkoxy von 1 bis 4 C-Atomen, wie

Methoxy, Äthoxy, Propoxy und Butoxy, Alkanoylamino von 2 bis 5 C-Atomen, wie Acetylamino und Propionylamino, gegebenenfalls substituiertes Benzoylamino, wie unsubstituiertes Benzoylamino oder durch Sulfo, Methyl und/oder Chlor substituiertes Benzoylamino, Amino, Alkylamino von 1 bis 4 C-Atomen, Phenylamino, Carbalkoxy von 2 bis 5 C-Atomen, wie Carbomethoxy und Carbäthoxy, Hydroxy, Carboxy, Halogen, wie Chlor und Brom, Nitro, Cyano, Carbamoyl, Sulfamoyl und Ureido angehören.

Die Formelglieder R° sind vorzugsweise ein Wasserstoffatom oder eine Methyl-oder Äthylgruppe. Sofern R° einen substituierten Alkylrest von 1 bis 4 C-Atomen darstellt, ist er vorzugsweise durch Hydroxy, Sulfo, Sulfato oder Cyano substituiert. Substituierte Alkylreste von R° sind beispielsweise Sulfomethyl, β-Hydroxyäthyl, β-Hydroxy-n-propyl, β-Sulfatoäthyl, β-Sulfoäthyl und β-Cyanoäthyl.

Die erfindungsgemäßen neuen Farbstoffe mit der faserreaktiven Gruppe der allgemeinen Formel (1) können beispielsweise in der Weise synthetisiert werden, daß man einen organischen Farbstoff, der eine Gruppe der allgemeinen Formel (4)

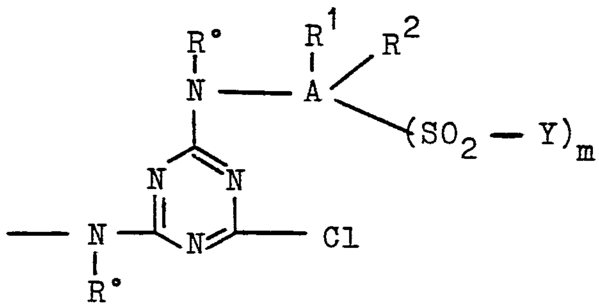

(4)

in welcher R°, R¹, R², A, Y und m die oben genannten Bedeutungen haben, mindestens einmal gebunden enthält, mit einer durch den oben definierten Substituenten R substituierten Pyridinverbindung in wäßrigem Medium bei einer Temperatur zwischen 40 und 100°C und einem pH-Wert zwischen 5 und 7 umsetzt. Erfindungsgemäße Azofarbstoffe lassen sich beispielsweise auch so herstellen, daß man in an und für sich üblicher Weise deren Diazokomponente mit deren Kupplungskomponente kuppelt, wobei mindestens eine der Komponenten die faserreaktive Gruppe (1) enthält.

Erfindungsgemäße und erfindungsgemäß verwendbare neue Farbstoffe mit dem Rest der allgemeinen Formel (1) sind beispielsweise die Farbstoffe der nachstehend angegebenen und definierten allgemeinen Formeln (5) bis (15)

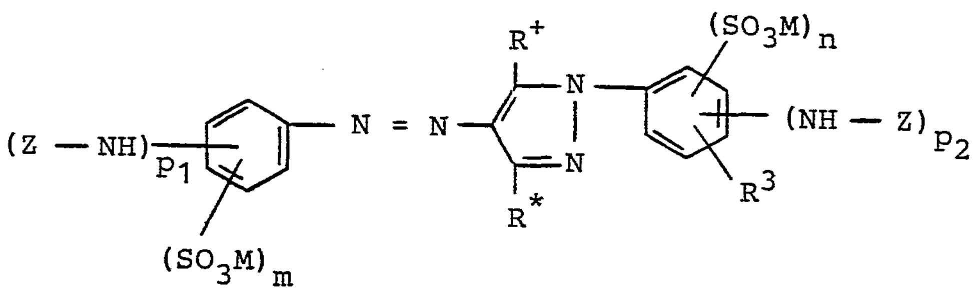

(5)

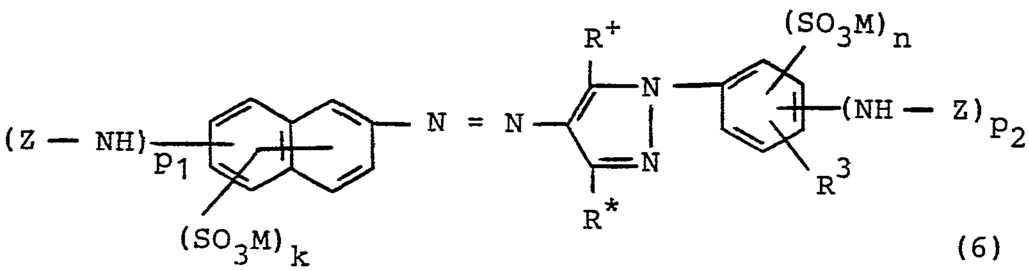

(6)

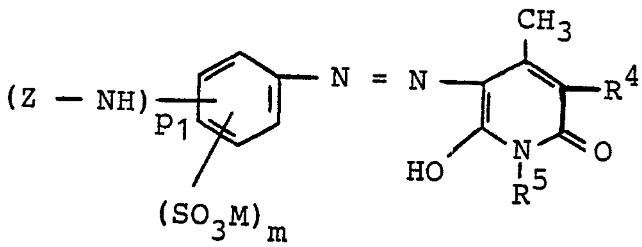

(7)

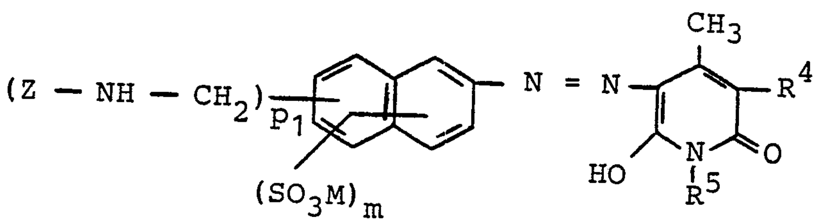

(8)

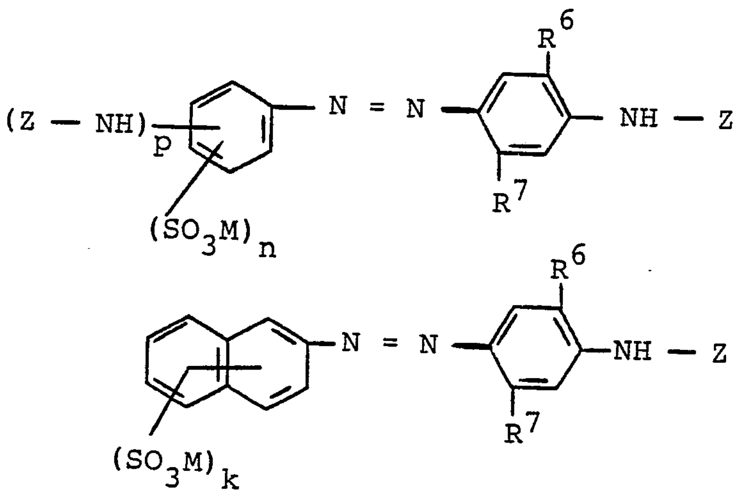

(9)

(10)

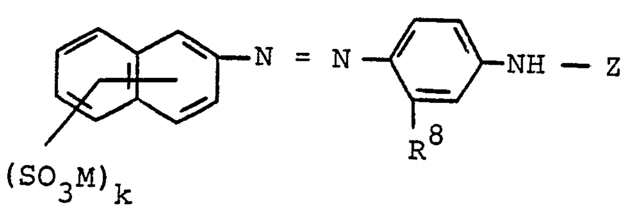

(11)

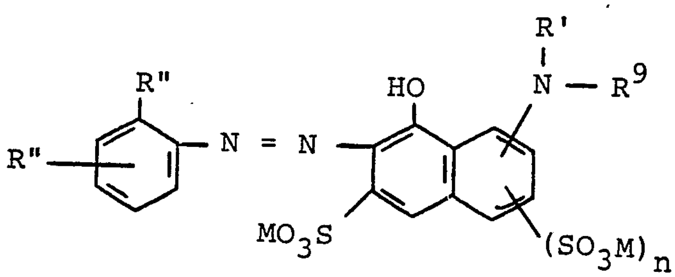

(12)

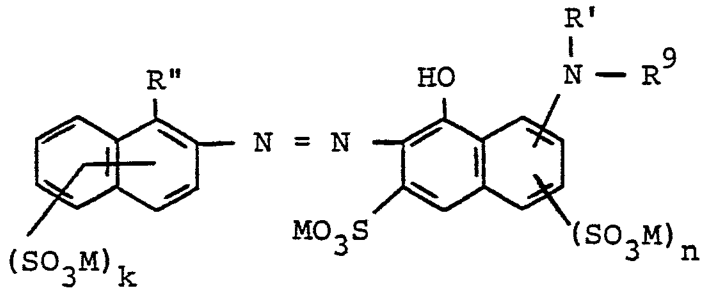

(13)

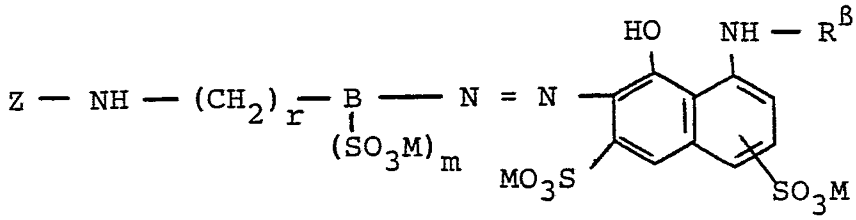

(14)

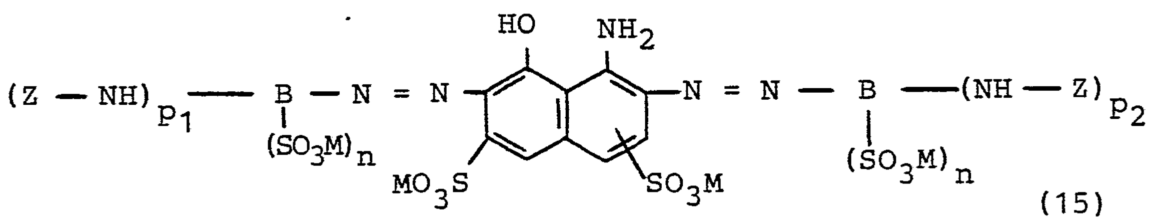

(15)

In diesen Formeln bedeuten:

M ist ein Wasserstoffatom oder ein Alkalimetall, wie Natrium, Kalium oder Lithium;

Z ist ein Rest der allgemeinen Formel (1a)

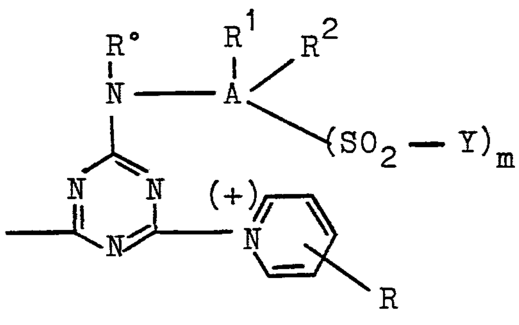

(1a)

$[An]^{(-)}$

in welcher A, R, R°, $R^1$, $R^2$, Y, m und $[An]^{(-)}$ die obengenannten Bedeutungen haben;

$P_1$ ist die Zahl Null oder 1 und

$P_2$ ist die Zahl Null oder 1,

wobei die Summe ($p_1$ + $p_2$) zwingend gleich 1 oder 2, bevorzugt 1 ist;

p ist die Zahl Null oder 1;

k ist die Zahl 1, 2 oder 3;

m ist die Zahl 1 oder 2;

n ist die Zahl Null, 1 oder 2;

r ist die Zahl Null oder 1;

$R^*$ ist die Methyl-oder Carboxygruppe;

$R^+$ ist die Hydroxy-oder Aminogruppe;

$R^3$ ist ein Wasserstoffatom, die Methylgruppe oder ein Chloratom;

$R^4$ ist ein Wasserstoffatom, die Cyan-, Carbamoyl-, Sulfooder Sulfomethyl-Gruppe;

$R^5$ ist ein Wasserstoffatom oder die Methyl-, Äthyl- oder $\beta$-Sulfoäthyl-Gruppe oder eine Gruppe der Formel $-(CH_2-CH_2-NH-Z)_{p2}$ oder $-(CH_2-CH_2-CH_2-NH-Z)_{p2}$mit $p_2$ und Z der oben genannten Bedeutung;

$R^6$ ist ein Wasserstoffatom oder die Methoxygruppe;

$R^7$ ist ein Wasserstoffatom, die Methyl-oder Methoxygruppe oder ein Chloratom;

$R^8$ ist die Acetylamino-, Ureido-, Cyclohexylureido- oder Phenylureido-Gruppe;

$R^9$ ist der Rest Z obengenannter Bedeutung oder eine Gruppe der Formel

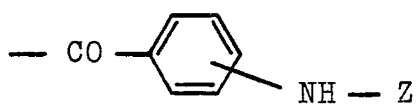

mit Z der obengenannten Bedeutung;

$R^\beta$ ist die Acetyl-oder Benzoylgruppe oder eine Sulfobenzoyl-Gruppe;

R' ist ein Wasserstoffatom oder die Methylgruppe;

R" ist ein Wasserstoffatom oder eine Sulfogruppe;

sofern ein Formelglied p, n, r, $p_1$ oder $p_2$ die Zahl Null bedeutet, ist diese Gruppe ein Wasserstoffatom.

Weitere neue Farbstoffe mit der faserreaktiven Gruppe der allgemeinen Formel (1), die in das erfindungsgemäße Verfahren eingesetzt werden können, sind beispielsweise die Metallkomplex-Verbindungen, bevorzugt 1:1-Kupferkomplex-, 1:2-Chromkomplex-und 1:2-Kobaltkomplex-Verbindungen, der nachstehend in metallfreier Form angegebenen Verbindungen der allgemeinen Formeln -(16) bis (19):

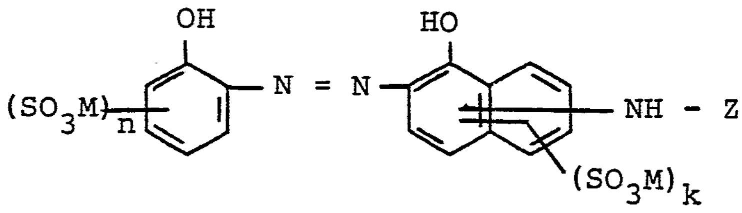

(16)

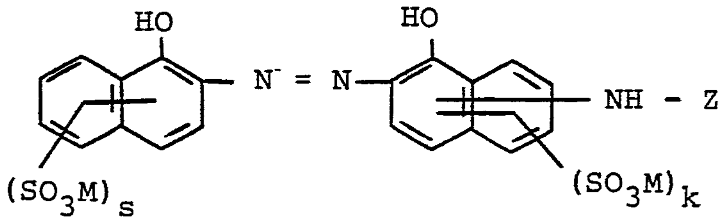

(17)

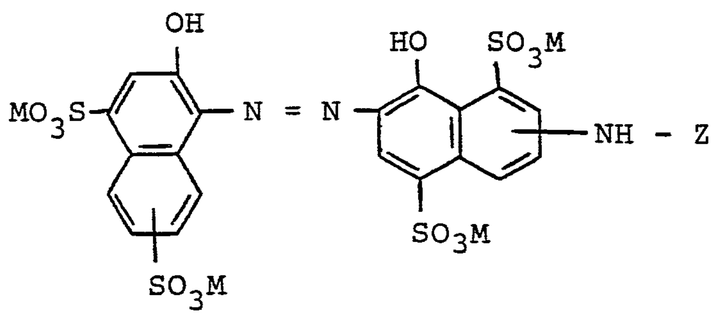

(18)

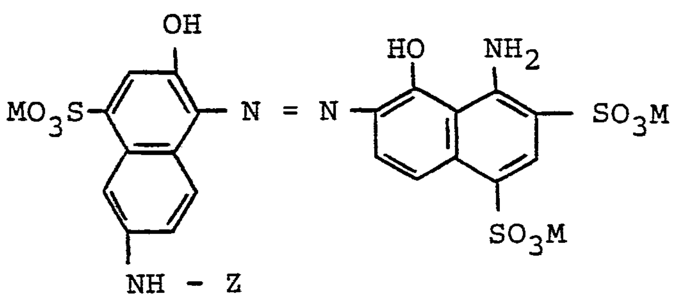

(19)

in welchen M, Z, k und n die oben genannten Bedeutungen haben und

s für die Zahl Null, 1, 2 oder 3 steht (wobei im Falle s gleich Null diese Gruppe ein Wasserstoffatom bedeutet).

Weitere neue Farbstoffe mit der faserreaktiven Gruppe der allgemeinen Formel (1), die in das erfindungsgemäße Verfahren eingesetzt werden können, sind beispielsweise Farbstoffe der allgemeinen Formel (20) bis (25):

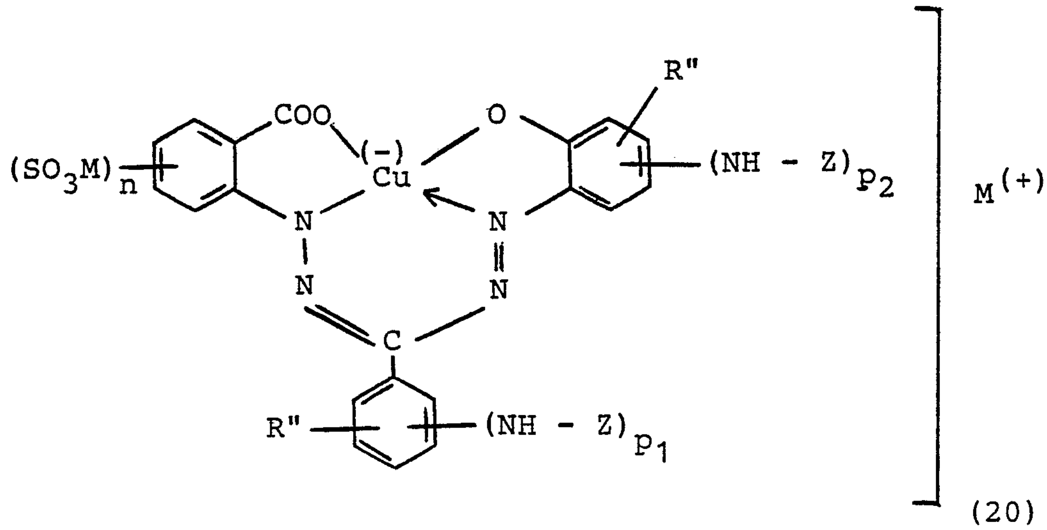

(20)

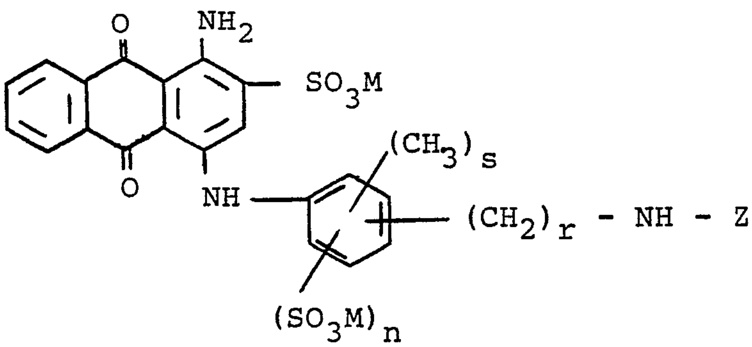

(21)

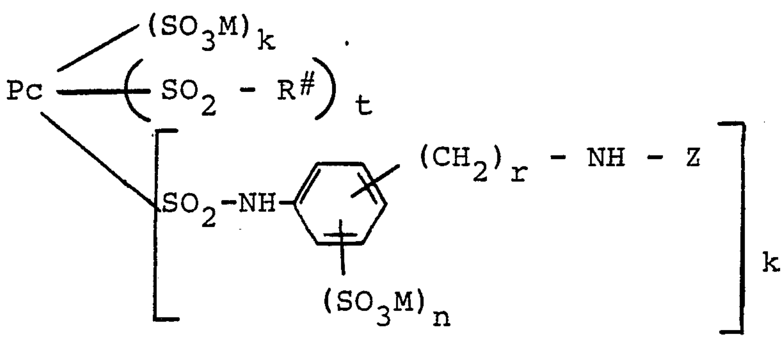

(22)

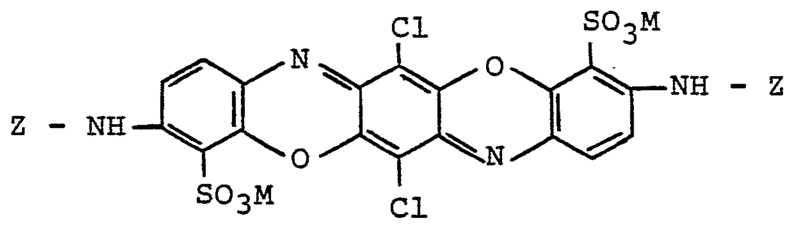

(23)

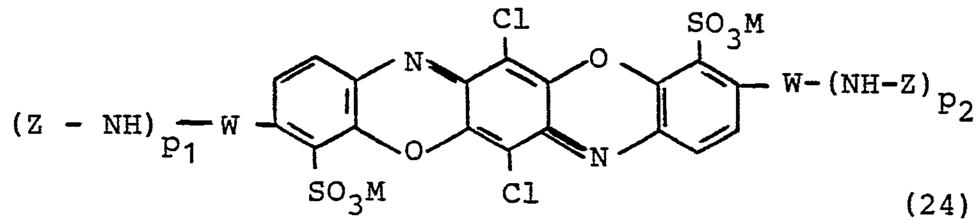

(24)

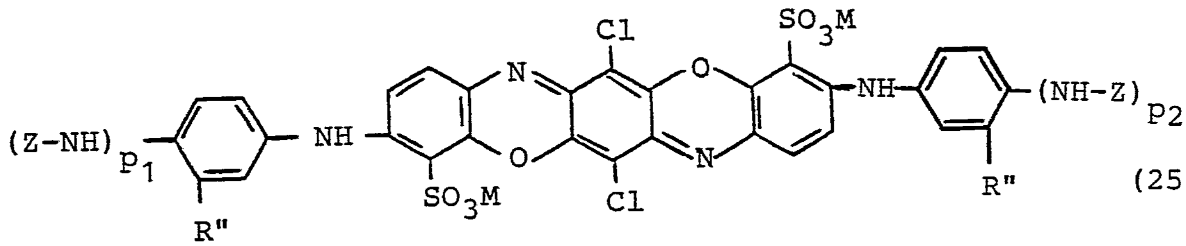

(25)

worin

M, Z, R", k, n, r, s, $p_1$ und $p_2$ die oben genannten Bedeutungen haben,

Pc den Kupfer-oder Nickelphthalocyaninrest bedeutet,

R# die Aminogruppe, eine Alkylaminogruppe mit 1 bis 4 C-Atomen, eine Dialkylaminogruppe mit Alkylgruppen von jeweils 1 bis 4 C-Atomen oder eine Morpholinogruppe bedeutet,

t für die Zahl Null oder 1 steht (wobei im Falle t gleich Null diese Gruppe ein Wasserstoffatom bedeutet) und

W einen Cycloalkylen-Rest, wie den Cyclohexylen-Rest, oder eine Alkylengruppe von 1 bis 6 C-Atomen, bevorzugt von 1 bis 4 C-Atomen, bedeutet,

wobei in Formel (22) die Indices k zueinander gleiche oder voneinander verschiedene Bedeutungen besitzen und die Summe aller Indices k und t gleich einer Zahl von 3 bis 4 ist.

In der faserreaktiven Gruppe der allgemeinen Formel (1) ist, sofern Y für den Rest der allgemeinen Formel (2b) steht, der alkalisch eliminierbare Substituent X beispielsweise ein Halogenatom, wie ein Chloratom, eine Thiosulfato-, eine niedere Alkanoyloxy-, wie Acetyloxy-, eine Benzoyloxy-, Sulfobenzoyloxy-, Phosphato-und insbesondere eine Sulfato-Gruppe oder eine Gruppe der allgemeinen Formel (2c)

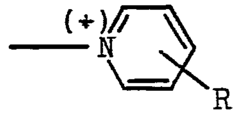 $[An]^{(-)}$ (2c)

in welcher R und $[An]^{(-)}$ die obengenannten Bedeutungen haben.

Bevorzugt ist in den erfindungsgemäßen bzw. erfindungsgemäß verwendeten Farbstoffen der allgemeinen Formeln (5) bis (25) der Formelrest Y in der faserreaktiven Gruppierung Z entsprechend der allgemeinen Formel (1a) die Vinylgruppe und insbesondere die β-Sulfatoäthyl-Gruppe oder eine Gruppe der allgemeinen Formel (2d)

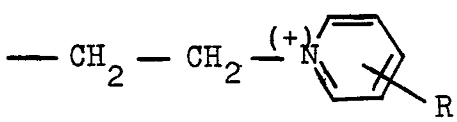 $[An]^{(-)}$ (2d)

mit R und $[An]^{(-)}$ der obengenannten Bedeutungen.

Das erfindungsgemäße Verfahren dient zur Herstellung von Färbungen auf Hydroxygruppen enthaltenden Fasermaterialien aller Art. Solche Fasermaterialien sind beispielsweise die natürliche Cellulosefasern, wie Baumwolle, Leinen und Hanf, und regenerierte Cellulose. Das erfindungsgemäße Verfahren ist in gleicher Weise zum Färben von hydroxygruppenhaltigen Fasern geeignet, die in Mischgeweben enthalten sind, wie beispielsweise von Gemischen aus Baumwolle mit Seide, Wolle, Triacetatfasern, sauer modifizierten Polyacrylnitrilfasern, Polyamidfasern und insbesondere Polyesterfasern. Diese Fasern können dabei in jeder beliebigen Form, beispielsweise in Form von losen Fasern, Filamenten und Strängen oder in Form von Geweben, vorliegen.

Die den Farbstoff und das säurebindende Mittel enthaltenden bzw. neutral oder gegebenenfalls in Anwesenheit von Puffersubstanzen schwach sauer eingestellten Färbeflotten und Druckpasten können innerhalb eines breiten Temperaturbereiches auf das zu färbende Material aufgebracht werden, vorzugsweise bei Raumtemperatur (15 bis 30°C) oder bei Temperaturen bis 60°C. Hierbei geht man zweckmäßigerweise so vor, daß man das Fasergut mit den Färbeflotten, die gegebenenfalls neutrale Salze enthalten, imprägniert und abquetscht, beispielsweise auf üblichem Wege foulardiert, und es, gegebenenfalls nach vorhergehender Zwischentrocknung, zwecks Fixierung der Farbstoffe einer Hitzebehandlung unterwirft. In ähnlicher Weise erzeugt man Drucke, indem man das Fasermaterial mit den genannten Druckpasten bedruckt, zwischentrocknet und es zur Fixierung der Farbstoffe einer Hitzebehandlung unterwirft. In Abhängigkeit von der Konzentration und der Art des säurebindenden Mittels ist es aber auch möglich, die Fixierung der Farbstoffe beispielsweise bei 20 bis 60°C durch mehrstündiges Liegenlassen des imprägnierten oder bedruckten, feuchten Fasergutes bei Raumtemperatur oder bei erhöhter Temperatur durchzuführen.

Die Fixierung der Färbungen und Drucke im alkalischen bis sauren Bereich durch Hitzeeinwirkung kann nach verschiedenen in der Technik üblichen Methoden erfolgen, beispielsweise durch Dämpfen mit Sattdampf bei ca. 100 bis 103°C oder mit überhitztem Wasserdampf bei Temperaturen bis 150°C, mit Heißluft bei Temperaturen von 120 bis 230°C (Thermofixieren), durch Infrarotbestrahlung, durch Hindurchführen durch heiße, stark salzhaltige wäßrige Lösungen oder durch Hinüberleiten der geklotzten oder bedruckten Stoffbahn über eine Reihe beheizter Walzen. Zur Durchführung des erfindungsgemäßen Verfahrens im alkalischen pH-Bereich werden als säurebindende Mittel beispielsweise Natriumhydroxyd, Kaliumhydroxyd oder ein Alkalisalz einer schwachen Säure, wie Natriumcarbonat oder -bicarbonat, Trinatriumphosphat, Dinatriumphosphat, Natriummetasilikat, Natriumformiat oder Natriumtrichloracetat, ebenso Ammoniak oder ausreichend basische organische Amine, wie Cyclohexylamin, oder Mischungen aus diesen säurebindenden Mitteln verwendet.

Für die Durchführung des Verfahrens im schwach sauren bis neutralem pH-Bereich ist es vorteilhaft, den Färbebädern und Druckpasten Substanzen oder Substanzgemische zuzugeben, die in wäßrigem Medium eine Pufferwirkung entfalten, wie beispielsweise die Alkalisalze der Borsäure, Essigsäure, Weinsäure und insbesondere der Phosphorsäure. Die säurebindenden Mittel oder die Puffersubstanzen können aber auch vor oder nach der Applikation der Färbeflotten oder Druckpasten, die dann diese Mittel enthalten, auf das Fasermaterial aufgebracht werden, beispielsweise durch Aufsprühen oder Klotzen einer wäßrigen Lösung des Mittels. Die Lösungen dieser Mittel können auch allgemein übliche Zusätze enthalten, wie sie bereits oben genannt sind. Werden diese Mittel

gleichzeitig mit dem Farbstoff auf das zu färbende Material appliziert, so ist es zweckmäßig, sie in der Färbeflotte oder in der den Farbstoff enthaltenden Druckpaste zu lösen.

Die Färbeflotten und Druckpasten können die allgemein üblichen Zusätze enthalten, -die Färbeflotten beispielsweise anorganische Salze, wie Alkalichloride oder Alkalisulfate, Harnstoff, Alginatverdickungen, wasserlösliche Celluloseaikyläther und Dispergierungs-und Egalisierhilfsmittel, die Druckpasten beispielsweise Harnstoff, Natrium-m-Nitrobenzolsulfonat und die üblichen Verdickungsmittel, wie Methylcellulose, Stärkeäther, Emulsionsverdickungen oder vorzugsweise ein Alginat, z.B. Natriumalginat.

Führt man das erfindungsgemäße Verfahren nach der Direktfärbemethode (Ausziehverfahren) aus, so kann es im al kalischen bis schwach sauren Bereich durchgeführt werden. Das Färbebad enthält dabei ein oder mehrere der obengenannten säurebindenden Mittel bzw. ein oder mehrere der obengenannten Puffersubstanzen und die gegebenenfalls üblichen Zusätze, wie anorganische Salze, Harnstoff und andere der obengenannten Hilfsmittel.

Gegenüber dem bekannten Verfahren der deutschen Auslegeschrift 2 835 053 hat das erfindungsgemäße Verfahren den Vorteil, daß es unter vergleichbaren färberischen Bedingungen ein erheblich überlegenes, färberisches Resultat auf Cellulosefasern bringt. Darüber hinaus lassen sich die nach dem erfindungsgemäßen Verfahren applizierten neuen Farbstoffe unter wesentlich milderen und unter faserschonenden Bedingungen auf den Fasermaterialien fixieren; so liefern sie in Anwesenheit eines säurebindenden Mittels bereits bei Fixiertemperaturen von 100°C volle Färbungen und Drucke. Weiterhin ist ihre Applikation und Fixierung auf der Faser nicht auf wenige und bestimmte Verfahren beschränkt, sondern die in der Technik bisher bekannten Färbe-und Druckmethoden lassen sich in voller anwendungstechnischer Breite in dem erfindungsgemäßen Verfahren einsetzen.

Eine besonders vorteilhafte und bevorzugte Verfahrensvariante des erfindungsgemäßen Verfahrens ist ein Verfahren zum Färben und Bedrucken eines Fasermaterials aus Cellulose-Polyester-Mischfasern unter Anwendung der neuen Farbstoffe mit der faserreaktiven Gruppe der allgemeinen Formel (1) aus wäßrigem Bad bei einer Temperatur zwischen 95 und 140°C und einem pH-Bereich zwischen 5 und 8, insbesondere unter zusätzlicher Anwendung eines üblichen Dispersionsfarbstoffes in dem wäßrigen Bad unter gleichzeitiger Anfärbung der Polyesterfaser mit diesem Dispersionsfarbstoff. Bei dieser vorteilhaften Verfahrens weise des erfindungsgemäßen Verfahrens kann eine gleichzeitige Anfärbung der Cellulosefaser und der Polyesterfaser mit dem faserreaktiven Farbstoff bzw. mit dem Dispersionsfarbstoff erfolgen, ohne das eine Schädigung des Dispersionsfarbstoffes eintritt. Es werden egale und farbtiefe Färbungen dieses Mischgewebes erhalten, die von gleich guter Qualität sind wie wenn die Cellulosefaser mit dem faserreaktiven Farbstoff und die Polyesterfaser mit dem Dispersionsfarbstoff in getrennten Ansätzen unter den angegebenen Bedingungen gefärbt worden wären.

Die mit den erfindungsgemäßen Farbstoffen bzw. mit dem erfindungsgemäßen Verfahren erhältlichen Färbungen und Drucke auf hydroxygruppenhaltigem Fasermaterial, auf welchem die neuen Farbstoffe mit der faserreaktiven Gruppe der allgemeinen Formel (1) fixiert sind, zeichnen sich durch klare Farbtöne, hohe färberische Ausbeute und hohe Farbstoff-Faser-Bindungsstabilität sowie durch gute bis sehr gute Lichtechtheit und durch sehr gute Naßechtheitseigenschaften, wie Wasch-, Wasser-und Schweißechtheiten, und durch gute Reibechtheit aus.

Die erfindungsgemäßen Farbstoffe sind erfindungsgemäß auch zum Färben von synthetischen oder natürlichen carbonamidgruppenhaltigen Fasermaterialien geeignet. Solche Fasermaterialien sind beispielsweise Wolle, Seide und Fasern aus synthetischen Polyamiden, wie Polyamid-6, Polyamid-6,6 und Polyamid-11. Ihre Anwendung erfolgt gemäß den Färbeweisen, die zum Färben von solchen Fasermaterialien mit faserreaktiven Farbstoffen üblich und bekannt sind.

Die nachfolgenden Beispiele dienen zur Erläuterung der Erfindung. Die angegebenen Teile sind Gewichtsteile. Prozentangaben beziehen sich auf Gewichtsprozente, sofern nicht anders vermerkt. Gewichtsteile und Volumenteile stehen im Verhältnis von Gramm zu Milliliter.

Beispiel 1

20 Teile eines Farbstoffes der Formel (26)

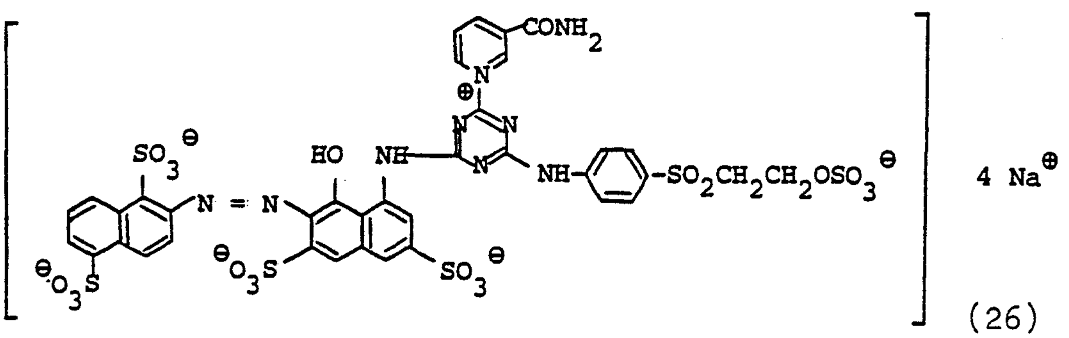

(26)

werden mit 50 Teilen Harnstoff in 200 Teilen Wasser unter Erwärmen gelöst. Der erhaltenen Lösung werden unter Rühren 400 Teile einer aus 40 Teilen Natriumalginat und 960 Teilen Wasser bestehenden Verdickung und 15 Teile Natriumbicarbonat zugegeben. Dann wird die Paste mit Wasser und Verdickung auf 1000 Teile eingestellt.

Mit dieser Druckpaste wird ein Baumwollgewebe bedruckt, getrocknet und 5 Minuten lang bei 101 bis 103°C gedämpft, anschließend kalt und heiß mit Wasser gespült, kochend geseift, wieder mit Wasser gespült und getrocknet. Man erhält ein kräftiges brillantrotes Druckmuster, das eine gute Lichtechtheit besitzt und gegenüber Wachbehandlungen sehr beständig ist.

Beispiel A (Synthese):

Der Farbstoff (26) läßt sich herstellen, indem man 8-Amino-N-[3'-chlor-5'-(4"-β-sulfatoäthylsulfonyl)-phenylamino-s-triazin-1'-yl]-3,6-disulfo-1-hydroxy-naphthalin mit Pyridin-3-carbonsäureamid in wäßrigem Milieu bei einer Temperatur von 80°C und einem pH-Wert von 6,5 umsetzt und anschließend mit diazotierter 2-Naphthylamin-1,5-disulfonsäure kuppelt. Die Ausfällung des Farbstoffes wird durch Einstreuen von Natriumchlorid vervollständigt. Nach der Aufarbeitung in üblicher Weise erhält man ein Farbstoffpulver, das sich in Wasser mit intensiv roter Farbe löst ($\lambda_{max}$ = 541 nm).

Beispiel 2

Man bereitet die in Beispiel 1 beschriebene Druckpaste ohne Zugabe von Natriumbicarbonat. Mit dieser Druckpaste, die kein säurebindendes Mittel enthält, wird ein Baumwollgewebe bedruckt, getrocknet und in einzelne Stoffproben zerschnitten. Zur Farbstoff-Fixierung werden die Stoffproben mit Heißluft 3 bzw. 5 Minuten lang auf unterschiedliche Temperaturen erhitzt, und zwar jeweils 120°C, 140°C und 180°C, sowie ein anderer Abschnitt 30 Sekunden lang auf 200°C. Die Stoffproben werden sodann kalt und heiß mit Wasser gespült, kochend geseift, wieder gespült und getrocknet. Die brillant roten Druckmuster, die eine sehr gute Waschechtheit besitzen, zeigen gute Übereinstimmung der Farbstärke, unabhängig von der Wahl der Fixierbedingungen.

Beispiel B (Vergleichsbeispiel)

20 Teile des Farbstoffes der Formel

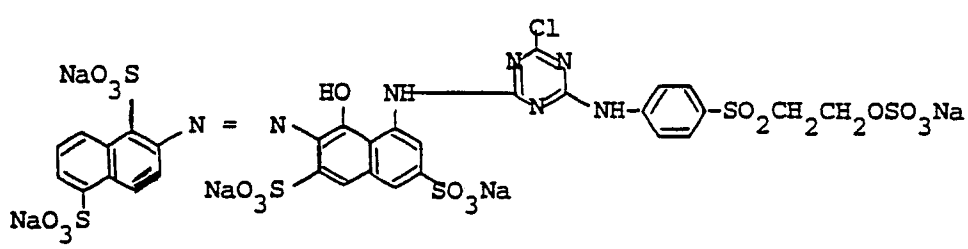

(erhältlich durch Kuppeln von diazotierter 2-Naphthylamin-1,5-disulfonsäure mit 8-Amino-N-[3'-chlor-5'-(4"-β-sulfatoäthylsulfonyl)-phenylamino-s-triazin-1'-yl]-3,6-disulfo-1-hydroxy-naphthalin) werden mit 50 Teilen Harnstoff und 200 Teilen heißem Wasser gelöst. Der intensiv rot gefärbten Lösung werden unter Rühren 400 Teile einer aus 40 Teilen Natriumalginat und 960 Teilen Wasser bestehenden Verdickung zugegeben. Dann wird die Paste mit Wasser und Verdickung auf 1000 Teile eingestellt.

Mit der so erhaltenen Druckpaste wird ein Baumwollgewebe bedruckt, nach dem Trocknen 5 Minuten bei 101 bis 103°C gedämpft, kalt und heiß mit Wasser gespült, kochend geseift, wieder gespült und getrocknet. Das erhaltene Gewebe ist praktisch farblos.

Erhitzt man das bedruckte Baumwollgewebe jeweils 5 und 10 Minuten auf 140°C, 160°C und 180°C, so erhält man zwar ein gefärbtes Gewebe; nach dem Waschen dieser Stoffproben geht allerdings praktisch die gesamte Färbung verloren, und man erhält nur schwache, unbrauchbare Druckmuster.

Beispiel B zeigt, daß der Farbstoff, der eine Chlortriazinylamino-und eine β-Sulfatoäthylsulfonyl-Gruppe enthält, durch Hitzeeinwirkung in Abwesenheit eines säurebindenden Mittels nicht oder nur spurenhaft fixiert wird.

Beispiel 3

Es wird eine Färbeflotte hergestellt, die in 250 Teilen Wasser 10 Teile des Farbstoffes der Formel (27)

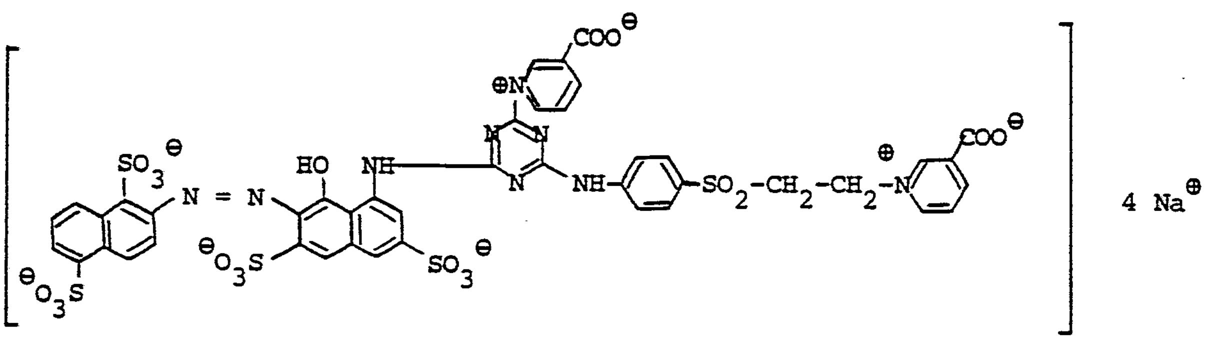

(27)

($\lambda_{max}$ in $H_2O$= 537 nm)

enthält (der Farbstoff wird durch Kuppeln von diazotierter 2-Naphthylamin-1,5-disulfonsäure mit 8-Amino-N-/3'-chlor-5'-(4"-vinylsulfonyl)-phenylamino-s-triazin-1'-yl/-3,6-disulfo-1-hydroxy-naphthalin und anschließende Umsetzung mit Pyridin-3-carbonsäure in wäßrigem Medium bei einem pH-Wert von 6,5 und 80°C hergestellt). Mit dieser Färbeflotte, welche mit primärem und sekundärem Natriumphosphat auf den pH-Wert 6,5 eingestellt wird, wird ein Baumwollgewebe geklotzt, auf 80 % Flottenaufnahme abge quetscht und danach 5 Minuten bei 65°C im Trockenschrank getrocknet. Das gefärbte und getrocknete Baumwollgewebe wird in einzelne Proben zerschnitten, die jeweils 5 Minuten lang bei 140°C, 160°C und bei 180°C einer Hitzeeinwirkung unterworfen, dann kalt und heiß mit Wasser gespült, kochend geseift, wieder gespült und getrocknet werden.

Es resultieren kräftige brillantrote Druckmuster.

Beispiel C (Vergleichsbeispiel)

Ersetzt man in Beispiel 3 den dort verwendeten Farbstoff durch den konstitutionell entsprechenden Farbstoff der Formel

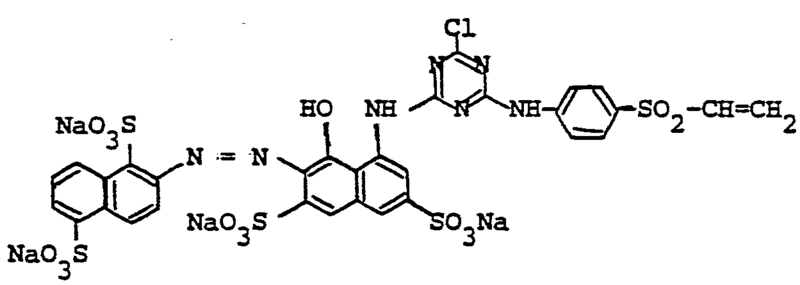

und verfährt in gleicher Weise wie in Beispiel 3 angegeben, so erhält man vergleichweise nur sehr farbschwache Drucke.

Das Vergleichsbeispiel zeigt, daß der erfindungsgemäß verwendete Farbstoff (27) auch im sauren pH-Bereich zum reaktiven Färben von Cellulosefasermaterialien verwendet werden kann und in seiner Reaktionsfähigkeit gegenüber Cellulose dem Vergleichsfarbstoff überlegen ist.

Beispiel 4

25 Teile mercerisierte Baumwolle werden in einem Färbebad, das aus 500 Teilen Wasser, 40 Teilen Natriumsulfat, 10 Teilen Natriumcarbonat und 1,25 Teilen des Farbstoffs der Formel (28)

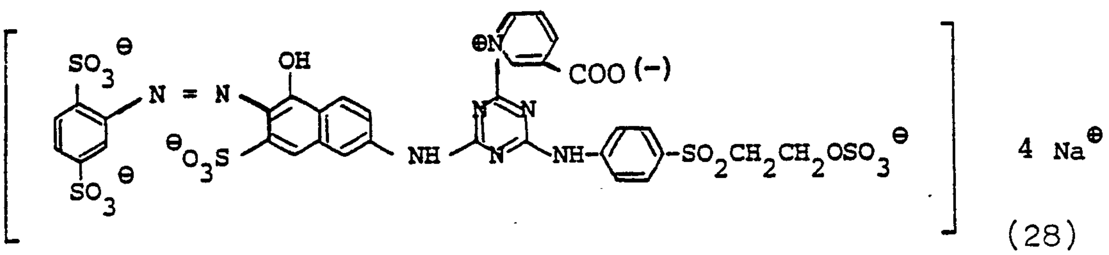

(28)

($\lambda_{max}$ in $H_2O$= 477 nm)

besteht, 45 Minuten lang bei 80°C gefärbt. Das gefärbte Gewebe wird zuerst in einem essigsäurehaltigen Bad, dann mit kochendem Wasser gespült, kochend geseift, wieder mit Wasser gespült und getrocknet. Man erhält eine echte orange Färbung.

Verwendet man anstelle von 10 Teilen Natriumcarbonat nur 5 Teile Natriumcarbonat oder 5 Teile tertiäres Natriumphosphat oder ein Gemisch aus 1,5 Teilen Natriumhydroxyd und 2 Teilen Natriumcarbonat, wo wird ein ähnlich gutes färberisches Resultat erzielt.

Beispiel 5

Es wird in einem HT-Färbeapparat ein Färbebad, bestehend aus 2,5 Teilen des gemäß Beispiel 4 verwendeten Farbstoffes (28), 1000 Teilen Wasser, 50 Teilen Natriumsulfat und 30 Teilen einer Lösung, die in 1000 Teilen Wasser 70 Teile sekundäres Natriumphosphat und 30 Teile primäres Natriumphosphat enthält, bereitet. Der pH-Wert der so zubereiteten Flotte beträgt 6,8 und bedarf keiner Korrektur.

Man geht bei 40°C mit 50 Teilen eines Baumwollgewebes in das Bad ein, heizt die Flotte rasch auf die Färbetemperatur von 130°C und färbt die Ware 1 Stunde bei dieser Temperatur. Sodann wird das Bad abgekühlt (die Flotte zeigt den pH-Wert 6,5), die erzeugte Färbung heiß mit Wasser gespült, kochend geseift, wieder mit Wasser gespült und getrocknet. Es resultiert eine orange Färbung, deren Tiefe mit der nach Beispiel 4 erhaltenen Färbung vergleichbar ist.

Beispiel 6

20 Teile des in Beispiel 4 verwendeten Farbstoffes (28) und 30 Teile Natriumsulfat werden in 1000 Teilen Wasser gelöst. Man versetzt die Lösung mit 28 Volumenteilen einer 33 %igen wäßrigen Natronlauge und imprägniert mit der so erhaltenen Färbeflotte bei 20°C ein Baumwollgewebe mit einer Flottenaufnahme von etwa 80 %, rollt es auf eine Walze, schlägt es in eine Folie ein und läßt es unter Drehung der Walze etwa 10 Stunden bei 18 bis 25°C verweilen. Danach wird die Färbung in einem sauren Bad neutralisiert, in kochendem Wasser gespült und getrocknet.

Man erhält eine klare orange Färbung, die gegenüber Lichteinwirkung und Waschbehandlungen sehr beständig ist.

Beispiel 7

1 Teil des Monoazofarbstoffes der Formel (29)

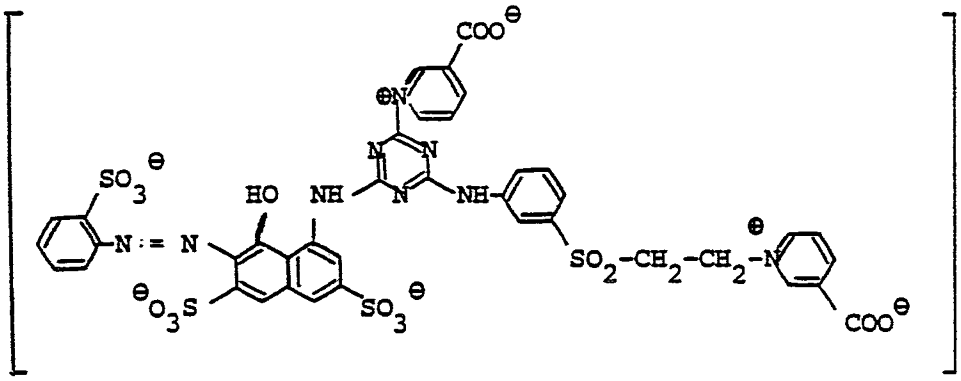

3 $Na^{(+)}$

(29)

($\lambda_{max}$ in $H_2O$= 510 nm)

wird bei einem pH-Wert von 6,0 in 944 Teilen Wasser gelöst und mit 1 Teil eines Dispersionsfarbstoffes mit der Colour-Index-Bezeichnung C.I. Disperse Red 73 (in Form der Handelsware) versetzt. Dazu gibt man 50 Teile Natriumsulfat, 2 Teile eines üblichen Dispergiermittels sowie ein Puffergemisch aus 1,2 Teilen Kaliumdihydrogensulfat und 0,8 Teilen krist. Dinatriumhydrogensulfat; das Färbebad besitzt nun einen pH-Wert von 6,5 bis 6,8.

In einem HT-Färbeapparat geht man bei 40°C mit 50 Teilen eines Baumwoll-Polyester-Mischgewebes (67/33) ein, steigert die Temperatur innerhalb von 15 Minuten auf 130°C und färbt 1 Stunde bei 130°C. Nachdem das Färbebad abgekühlt und abgelassen ist, wird die erhaltene Färbung mit Wasser gespült, kochend geseift, erneut mit Wasser gewaschen und getrocknet. Es resultiert eine einheitliche lebhafte Rotfärbung auf beiden Faseranteilen.

Beispiel 8

2,5 Teile des Disazofarbstoffes der Formel - (30)

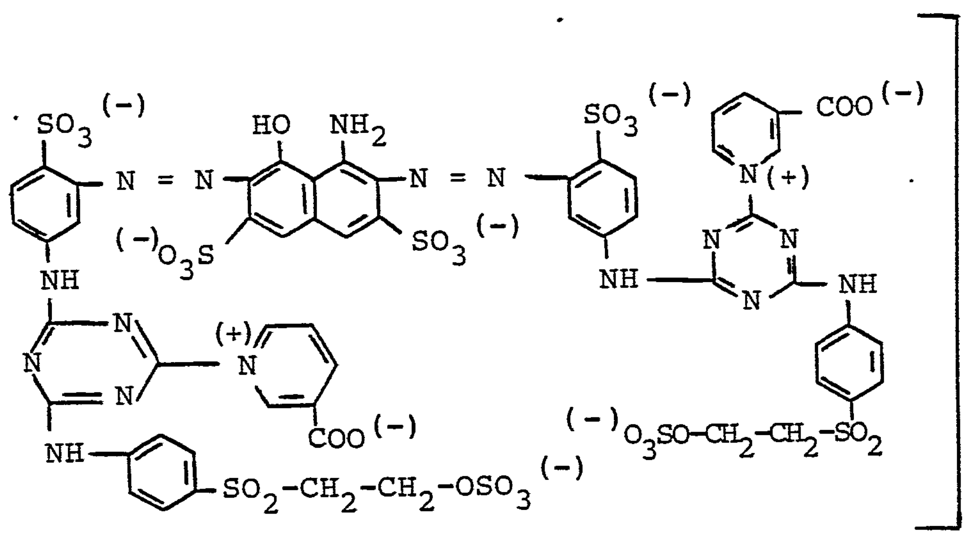

•6 $Na^{(+)}$

(30)

($\lambda_{max}$in $H_2O$= 595 nm)

werden bei einem pH-Wert von 6,0 in 944 Teilen Wasser gelöst und mit 2,5 Teilen des Dispersionsfarbstoffes C.I. Disperse Blue 81 (in Form der Handelsware) vermischt. Es werden 80 Teile Natriumsulfat und 2 Teile eines Dispergiermittels zugegeben. Nachdem man das Färbebad durch Zugabe von 1,2 Teilen Kaliumdihydrogenphosphat und 0,8 Teilen krist. Dinatriumhydrogensulfat auf einen pH-Wert von 6,6 eingestellt hat, färbt man mit diesem in einem HT-Färbeapparat 50 Teile eines Baumwoll-Polyester-Mischgewebes (67/33), indem man zunächst das Gewebe in ds 40°C warme Bad einbringt, sodann die Badtemperatur innerhalb von 15 Minuten auf 130°C steigert und die Färbung 1 Stunde bei 130°C fortführt. Anschließend stellt man die Färbung, wie in Beispiel 7 angegeben, fertig.

Das Ergebnis ist eine kräftige Blaufärbung auf beiden Faseranteilen.

Beispiel 9

Es wird ein Färbebad aus 2 Teilen des Farbstoffes der Formel (31)

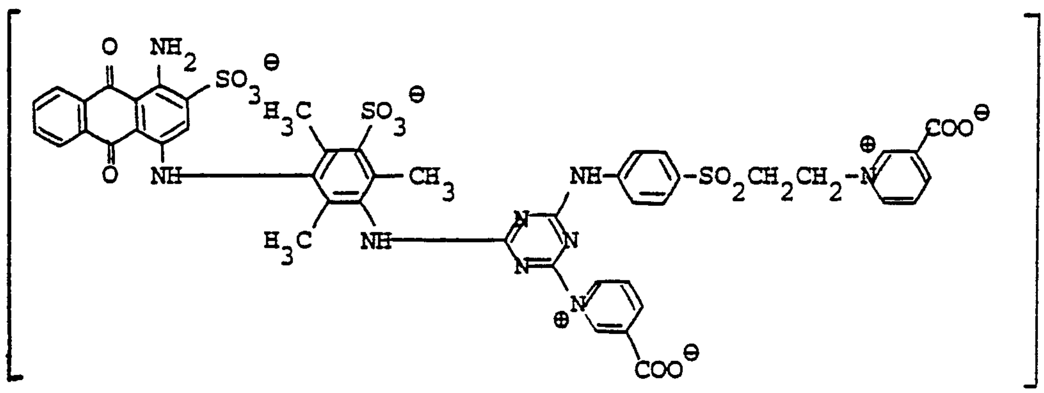

2 $Na^{\oplus}$

(31)

($\lambda_{max}$ in $H_2O$= 587 nm)

2 Teilen C.I. Disperse Blue 56, 1 Teil Natrium-m-nitrobenzolsulfonat, 1,9 Teilen eines Dispergiermittels (bspw. ein Naphthalinsulfonsäure-Formaldehyd-Kondensat) und 50 Teilen Natriumsulfat in 1000 Teilen Wasser zubereitet. In das mit Essigsäure und Natriumacetat auf den pH-Wert 5,5 bis 6,5 eingestellte Färbebad geht man bei 60°C mit einem Polyester-Baumwolle-Mischgewebe - (60/40) ein, steigert die Temperatur innerhalb von 20 Minuten auf 128°C und färbt 45 Minuten bei dieser Temperatur. Nach Beendigung des Färbens läßt man das Färbebad abkühlen. Das gefärbte Gewebe wird mit Wasser gespült, kochend geseift, nochmals mit Wasser gespült und getrocknet. Es resultiert eine brillante Blaufärbung auf beiden Faseranteilen, die gegenüber Waschbehandlungen und Lichteinwirkung sehr beständig ist.

Beispiel 10

Zur Herstellung eines Farbstoffbades wird folgendermaßen verfahren:

2 Teile des Farbstoffes (31) werden in 955,5 Teilen Wasser gelöst und mit 40 Teilen Natriumsulfat, 2 Teilen krist. Dinatriumhydrogenphosphat und 0,5 Teilen Kaliumdihydrogenphosphat versetzt. Bei dem pH-Wert von 6,5 bis 6,8 trägt man 50 Teile eines Baumwolle/Wolle-Garns (50:50) in das Bad ein und steigert die Temperatur innerhalb 15 Minuten auf 100°C. Die Färbung wird 40 Minuten bei dieser Temperatur durchgeführt. Anschließend wird der pH des Bades durch Essigsäure auf einen Wert von 4 gestellt, und der Färbeprozeß wird weitere 40 Minuten bei 100°C fortgeführt. Nach Beendigung der Färbung wird das Garn mit heißem Wasser gewaschen, mit kaltem Wasser gespült und getrocknet. Man erhält eine brillante Blaufärbung auf beiden Faseranteilen mit guten Licht-und Naßechtheitseigenschaften.

Beispiel 11

Zur Herstellung eines Farbstoffbades wird folgendermaßen verfahren:

100 Teile eines Polyamidgewebes werden in ein 40°C warmes Wäßriges Färbebad eingebracht, das aus 3000 Teilen Wasser, 2 Teilen des Farbstoffs - (26) aus Beispiel 1, 0,15 Teilen eines Anlagerungsprodukts von 12 Mol Äthylenoxid an 1 Mol Stearylamin, 2 Teilen Ammoniumacetat und 2 Teilen 60

%ige wäßrige Essigsäure besteht. Die Färbetemperatur wird innerhalb von 30 Minuten auf Kochtemperatur erhöht und die Färbung anschließend 60 Minuten lang bei 100°C weitergeführt. Nach dem üblichen Auswaschen und Fertigstellen der erhaltenen Polyamidfaserfärbung zeigt dieses Polyamidgewebe einen farbstarken roten Farbton mit sehr guten Echtheitseigenschaften.

Beispiel 12

10 Teile des in Beispiel 1 verwendeten Farbstoffes (26) werden in 250 Teilen Wasser bei pH-Wert 6,5 gelöst. Die Farbstofflösung wird mit 10 Teilen Harnstoff versetzt. Baumwollpopeline wird 10 Minuten mit dieser Färbeflotte bei 25°C behandelt, auf 80 % Flottenaufnahme abgequetscht, 5 Minuten bei 65°C getrocknet und 15 Minuten bei 180°C in einer Bügelpresse belassen. Das gefärbte Material wird dann mit kaltem und heißem Wasser gespült, kochend geseift, wieder gespült und getrocknet. Es resultiert eine rote Färbung, die gegenüber energischen Waschbehandlungen sehr beständig ist.

Beispiele 13 bis 26

Man verfährt in erfindungsgemäßer Weise zum Färben und Bedrucken von Cellulosefasermaterialien, beispielsweise nach einem der obigen Beispiele 1 bis 12, unter Verwendung der in den nachstehend Tabellenbeispielen genannten Reaktivfarbstoffe; die Farbstoffe werden bevorzugt in Form ihrer Alkalimetallsalze eingesetzt. Man erhält echte, farbstarke Färbungen und Drucke in den in dem jeweiligen Beispiel angegebenen Farbton.

In den Strukturformeln bedeuten:

$W_1$ ist die Vinylsulfonyl-Gruppe,

$W_2$ ist die $\beta$-Sulfatoäthylsulfonyl-Gruppe,

$W_3$ ist die $\beta$-Phosphatoäthylsulfonyl-Gruppe,

$W_4$ ist die $\beta$-Chloräthylsulfonyl-Gruppe,

$Z_1$ ist der Pyridinium-Rest,

$Z_2$ ist der 3-Carboxypyridinium-Rest,

$Z_3$ ist der 3-Sulfo-pyridinium-Rest,

$Z_4$ ist der Pyridinium-3-carbonamid-Rest,

$Z_5$ ist der Pyridinium-3-carbonsäuremethylester-Rest.

| Bsp. | Farbstoff der Formel | Farbton auf Cellulose. |
|---|---|---|
| 13 | 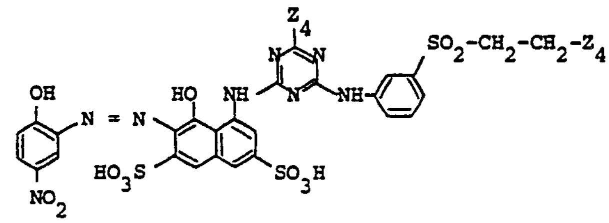 1:2 Cr-Komplex | schwarz |
| 14 | 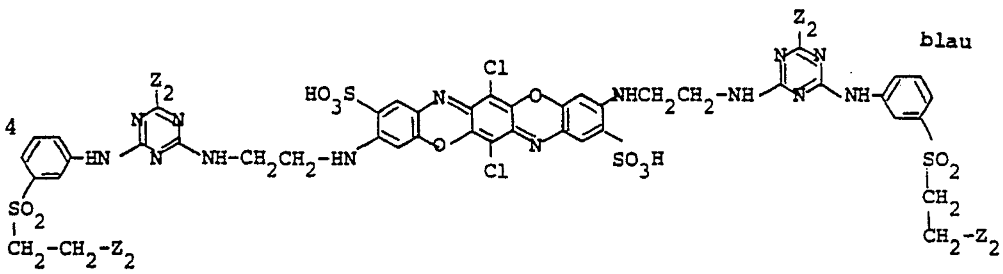 | blau |
| 15 | 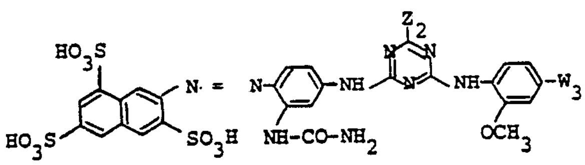 | gelb |
| 16 | 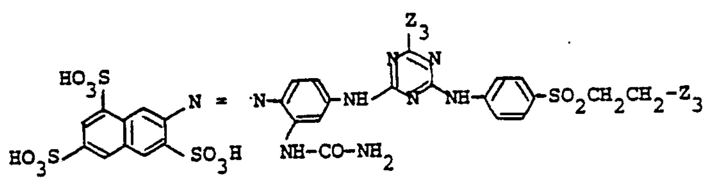 | gelb |
| 17 | 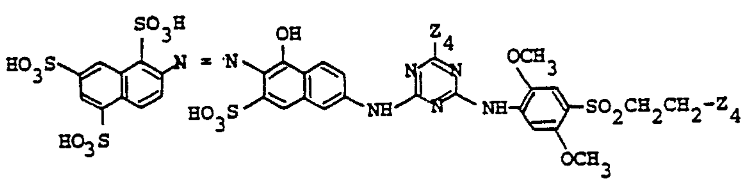 | orange |

| Bsp. | Farbstoff der Formel | Farbton auf Cellulose |
|---|---|---|
| 18 | 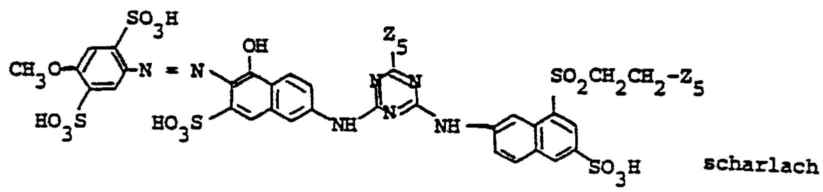 | scharlach |
| 19 | 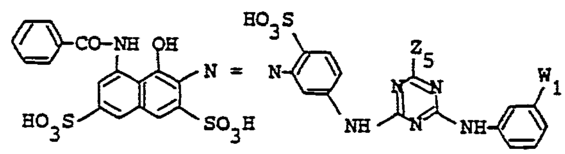 | rot |
| 20 | 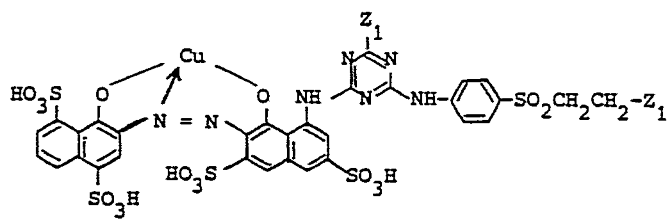 | blau |
| 21 | 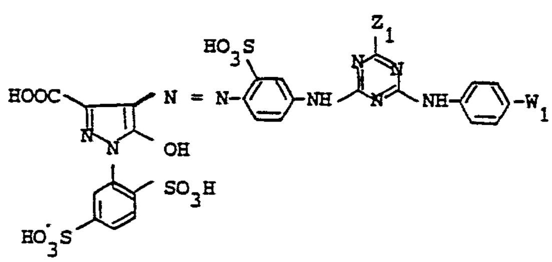 | rotst. Gelb |
| 22 | 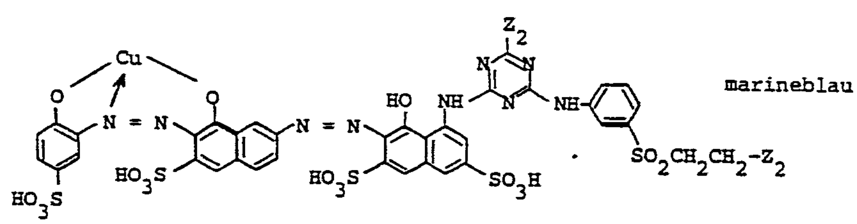 | marineblau |

| Bsp. | Farbstoff der Formel | Farbton auf Cellulose |
|---|---|---|
| 23 | 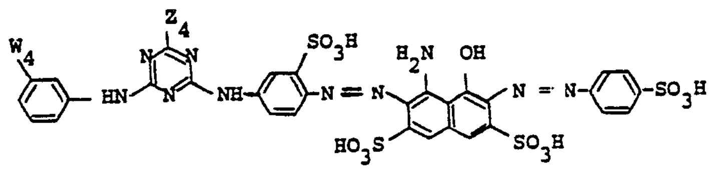 | marineblau |
| 24 | 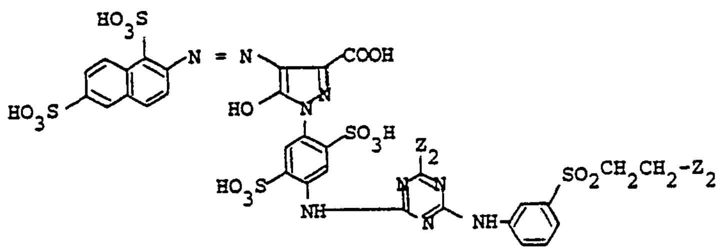 | gelb |
| 25 | 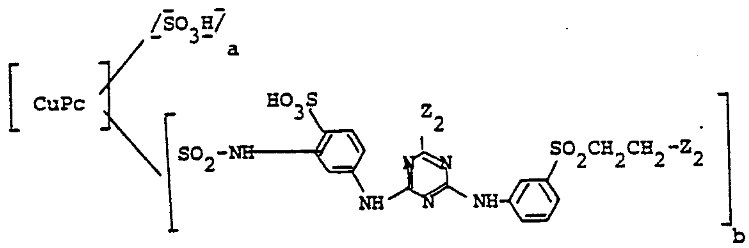 a + b= 4 | türkisblau |
| 26 | 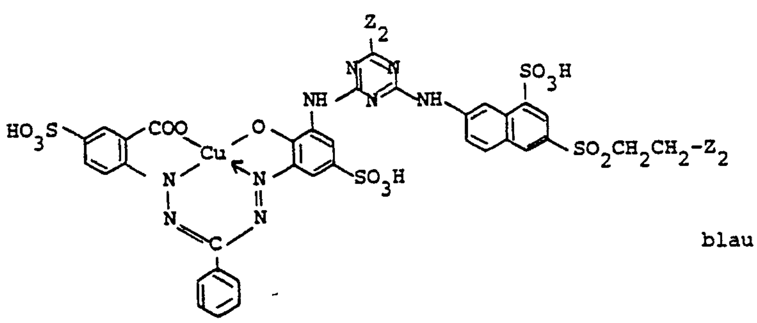 | blau |

## Ansprüche

1. Verfahren zum Färben oder Bedrucken von Hydroxygruppen enthaltenden Fasermaterialien, dadurch gekennzeichnet, daß man einen wasserlöslichen organischen Farbstoff, der mindestens einmal die faserreaktive Gruppe der allgemeinen Formel (1)

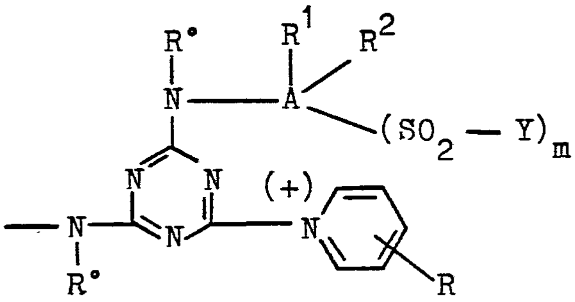

$[An]^{(-)}$

(1)

enthält, in welcher

R° ein Wasserstoffatom oder eine unsubstituierte oder substituierte Alkylgruppe ist,

wobei die beiden R° zueinander gleiche oder voneinander verschiedene Bedeutungen besitzen können,

$A_1$ ein Benzol-oder Naphthalinring ist,

$R^1$ ein Wasserstoffatom, ein Halogenatom, eine Alkylgruppe, eine Alkoxygruppe, eine Hydroxygruppe, eine Carboxygruppe oder Sulfogruppe ist,

$R^2$ ein Wasserstoffatom, ein Halogenatom, eine Alkylgruppe, eine Alkoxygruppe, eine Hydroxygruppe, eine Carboxygrupe oder Sulfogruppe ist,

wobei die beiden Rest $R^1$ und $R^2$ können zueinander gleiche oder voneinander verschiedene Bedeutungen besitzen konnen,

Y eine Gruppe der allgemeinen Formel (2a) oder -(2b)

——— $SO_2$-CH = $CH_2$ (2a)

——— $SO_2$-$CH_2$-$CH_2$-X (2b) ist,

in welcher

X einen alkalisch eliminierbaren Substituenten bedeutet,

m die Zahl 1 oder 2 ist,

R ein Wasserstoffatom, ein Halogenatom, eine Alkylgruppe, eine Alkoxygruppe, eine Carbonamidgruppe, eine Carboxygruppe, eine Carbalkoxygruppe von 2 bis 5 C-Atomen, eine Carbophenoxygruppe, eine Cyanogruppe oder eine Sulfogruppe ist,

$[An]^{(-)}$ ein farbloses anorganisches oder organisches monovalentes Anion oder das Äquivalent eines farblosen anorganischen oder organischen bi- oder trivalenten Anions ist,

und gegebenenfalls eine anionische wasserlöslichmachende Gruppe gebunden enthält, oder mehrere solcher Farbstoffe auf dem zu färbenden Material im sauren, neutralen oder alkalischen pH-Bereich fixiert.

2. Verfahren nach Anspruch 1, dadurch gekennzeichnet, daß der verwendete Farbstoff mit der faserreaktiven Gruppe der allgemeinen Formel (1) ein Farbstoff aus der Triarylmethan-, Naphthochinon-, Benzanthron-, Azin-, Dioxazin-, Phenazin-, Phenoxazin-, Azomethin-, Xanthen-, Formazan-, Nitro-, Stilben-, Phthalocyanin-, Anthraachinon-, Monoazo-, Polyazo-und Metallkomplexazofarbstoff-Reihe ist.

3. Verfahren nach Anspruch 1 oder 2, dadurch gekennzeichnet, daß beide R° in der Gruppe der Formel (1) für ein Wasserstoffatom stehen.

4. Verfahren nach Anspruch 1, 2 oder 3, dadurch gekennzeichnet, daß man einen oder mehrere der Farbstoffe mit der faserreaktiven Gruppe der allgemeinen Formel (1) in Form einer wäßrigen Lösung

oder Druckpaste, die gegebenenfalls übliche Hilfsmittel enthalten, auf das Fasermateril aufbringt und den bzw. die Farbstoffe bei einer Temperatur zwischen 10 und 230°C und bei einem pH-Wert zwischen 5 und 12 auf dem Fasermaterial fixiert.

5. Verfahren nach Anspruch 4, dadurch gekennzeichnet, daß man den Farbstoff auf dem Fasermaterial bei einer Temperatur zwischen 40 und 150°C fixiert.

6. Verfahren nach Anspruch 1, 2 3 oder 4, dadurch gekennzeichnet, daß man das Fasermaterial in einem Färbebad, das einen oder mehrere dieser Farbstoffe mit der faserreaktiven Gruppe (1) und gegebenenfalls übliche Färbehilfsmittel und ein oder mehrere säurebindende Mittel gelöst enthält, bei einem pH-Wert zwischen 7,5 und 10 bei einer Temperatur zwischen 40 und 150°C nach der Ausziehmethode behandelt.

7. Verfahren nach Anspruch 1, 2, 3 oder 4, dadurch gekennzeichnet, daß man das Fasermaterial in einem Färbebad, das einen oder mehrere der Farbstoffe mit der faserreaktiven Gruppe (1) und gegebenenfalls übliche Färbehilfsmittel und gegebenenfalls Puffersubstanzen enthält, bei einem pH-Wert zwischen 5 und 7 und einer Temperatur zwischen 40 und 150°C nach der Ausziehmethode behandelt.

8. Verfahren nach Anspruch 6 oder 7, dadurch gekennzeichnet, daß man die Behandlung des Fasermaterials in dem Färbebad bei einer Temperatur zwischen 60 und 100°C vornimmt.

9. Verfahren nach Anspruch 1, 2 oder 3, dadurch gekennzeichnet, daß man als Fasermaterial ein Material aus Cellulose-Polyester-Mischfasern einsetzt und die Färbung in Gegenwart eines oder mehrerer Dispersionsfarbstoffe in einem wäßrigen Färbebad, das die üblichen Färbehilfsmittel enthält, bei einer Temperatur zwischen 95 und 140°C und einem pH-Wert zwischen 5 und 8 durchführt.

10. Wasserlösliche organische Farbstoffe mit mindestens einer faserreaktiven Gruppe der allgemeinen Formel (1)

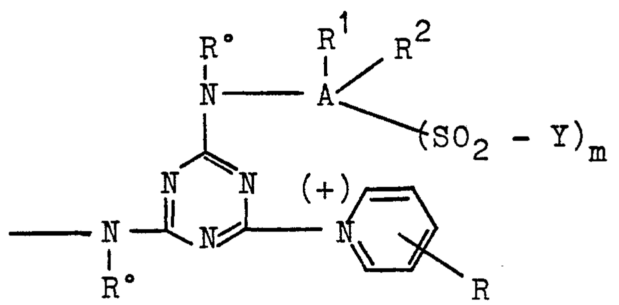

$[An]^{(-)}$

(1)

in welcher

R° ein Wasserstoffatom oder eine unsubstituierte oder substituierte Alkylgruppe ist,

wobei die beiden R° zueinander gleiche oder voneinander verschiedene Bedeutungen besitzen können,

$A_1$ ein Benzol-oder Naphthalinring ist,

$R^1$ ein Wasserstoffatom, ein Halogenatom, eine Alkylgruppe, eine Alkoxygruppe, eine Hydroxygruppe, eine Carboxygruppe oder Sulfogruppe ist,

$R^2$ ein Wasserstoffatom, ein Halogenatom, eine Alkylgruppe, eine Alkoxygruppe, eine Hydroxygruppe, eine Carboxygruppe oder Sulfogruppe ist,

wobei die beiden Reste $R^1$ und $R^2$ können zueinander gleiche oder voneinander verschiedene Bedeutungen besitzen konnen,

Y eine Gruppe der allgemeinen Formel (2a) oder -(2b)

——— $SO_2$-$CH=CH_2$ (2a)

——— $SO_2$-$CH_2$-$CH_2$-X (2b) ist,

in welcher

X einen alkalisch eliminierbaren Substituenten bedeutet,

m die Zahl 1 oder 2 ist,

R ein Wasserstoffatom, ein Halogenatom, eine Alkylgruppe, eine Alkoxygruppe, eine Carbonamidgruppe, eine Carboxygruppe, eine Carbalkoxygruppe von 2 bis 5 C-Ato-men, eine Carbophenoxygruppe, eine Cyanogruppe oder eine Sulfogruppe ist,

$[An]^{(-)}$ ein farbloses anorganisches oder organisches monovalentes Anion oder das Äquivalent eines farblosen anorganischen oder organischen bi- oder trivalenten Anions ist.

11. Farbstoff nach Anspruch 10 der allgemeinen Formel

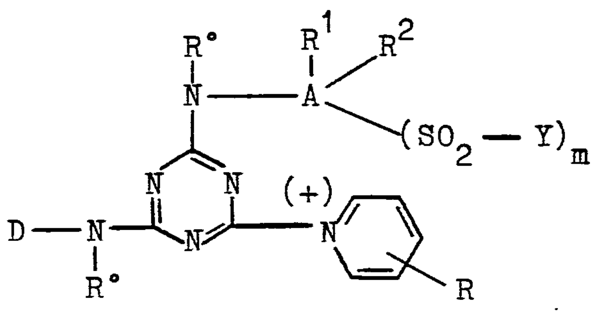

(3a)

$[An]^{(-)}$

in welcher R, R°, R', R², A, Y, m und $[An]^{(-)}$ die in Anspruch 10 genannten Bedeutungen haben und D den Rest eines Farbstoffchromophors eines Triarylmethan-, Naphthochinon-, Benzanthron-, Azin-, Dioxazin-, Nitro-, Stilben-oder Formazanfarbstoffes, insbesondere eines Phthalocyaninfarbstoffes, Anthrachinonfarbstoffes oder metallfreien oder metallhaltigen Monoazo-oder Polyazofarbstoffes bedeutet, der mindestens eine Sulfogruppe enthält und einen oder mehrere Substituenten, die beispielsweise der Gruppe der Substituenten Alkyl von 1 bis 4 C-Atomen, Alkoxy von 1 bis 4 C-Atomen, Alkanoylamino von 2 bis 5 C-Atomen, gegebenenfalls substituiertes Benzoylamino, Amino, Alkylamino von 1 bis 4 C-Atomen, Phenylamino, Carbalkoxy von 2 bis 5 C-Atomen, Hydroxy, Carboxy, Halogen, Nitro, Cyano, Carbamoyl, Sulfamoyl und Ureido angehören, besitzt.

12. Farbstoff nach Anspruch 10 der allgemeinen Formel

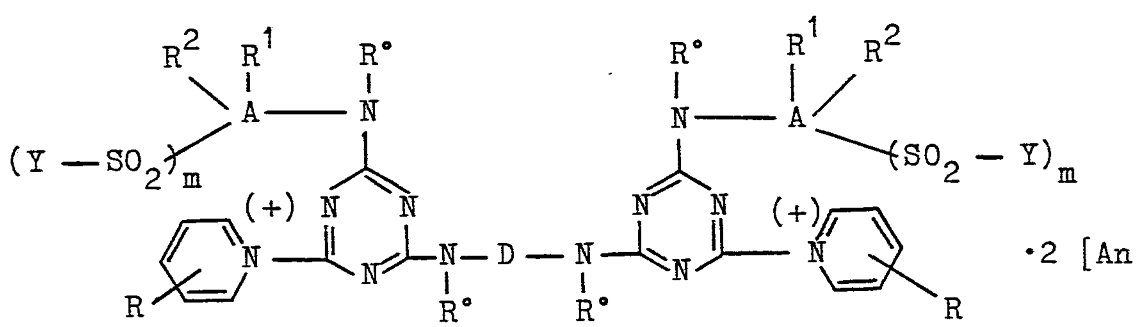

$\cdot 2\ [An]^{(-)}$

in welcher R, R°, R', R², A, Y, m und $[An]^{(-)}$ die in Anspruch 10 und D die in Anspruch 11 genannten Bedeutungen haben.

13. Verfahren zur Herstellung der in Anspruch 10 genannten und definierten Farbstoffe der allgemeinen Formel (1), dadurch gekennzeichnet, daß man einen organischen Farbstoff, der eine Gruppe der allgemeinen Formel (4)

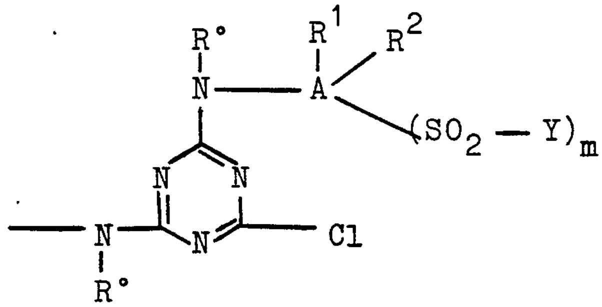

(4)

in welcher R°, $R^1$, $R^2$, A, Y und m die in Anspruch 10 genannten Bedeutungen haben, mindestens einmal gebunden enthält, mit einer durch den in Anspruch 10 definierten Substituenten R substituierten Pyridinverbindung in wäßrigem Medium bei einer Temperatur zwischen 40 und 100°C und einem pH-Wert zwischen 5 und 7 umsetzt.

14. Verfahren zur Herstellung von Azofarbstoffen gemäß Anspruch 10, dadurch gekennzeichnet, daß man die Diazokomponente des Azofarbstoffes mit der Kupplungskomponente des Azofarbstoffes, wobei mindestens eine der Komponenten die faserreaktive Gruppe der allgemeinen Formel (1) enthält, kuppelt.

15. Verwendung der Farbstoffe nach Anspruch 10 zum Färben oder Bedrucken von hydroxy-und/oder carbonamidgruppenhaltigem Material.

Europäisches Patentamt

# EUROPÄISCHER RECHERCHENBERICHT

Nummer der Anmeldung

EP 86 10 3511

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 319 689 (ICI)<br>* Seite 1, Formel 1; Seite 2, Zeile 21 *<br>--- | 1 | C 09 B 62/04<br>C 09 B 62/503<br>D 06 P 1/38 |
| P,X | EP-A-0 167 219 (SUMITOMO CHEMICAL CO)<br>* Ansprüche 1,2,4,5; Seite 35, Zeile 7 - Seite 38, Zeile 21; Beispiele *<br>----- | 1-11, 13-15 | |
| | | | RECHERCHIERTE SACHGEBIETE (Int. Cl.4) |
| | | | C 09 B |

Der vorliegende Recherchenbericht wurde für alle Patentansprüche erstellt.

| Recherchenort | Abschlußdatum der Recherche | Prüfer |
|---|---|---|
| DEN HAAG | 27-06-1986 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument